# EUROPEAN PATENT APPLICATION

(11) **EP 2 829 395 A1**
(43) Date of publication of application: **28.01.2015**
(21) Application number: 14425102.2
(22) Date of filing: 24.07.2014
(51) Int. Cl.: B32B 5/00, B32B 7/00, B32B 7/02, B32B 7/04, B32B 7/12, B32B 9/00, B32B 9/04, B32B 15/00, B32B 15/04, B32B 15/08, B32B 15/095, B32B 15/14, B32B 15/20, B32B 27/00, B32B 27/08, B32B 27/12, B32B 27/30, B32B 27/40

(54) **Multilayer stratified cladding for covering and decorating or making structures and objects or parts thereof.**

(30) Priority: 26.07.2013 IT MI20131253
(71) Applicant: AOR S.r.l., 25030 Adro (BS) (IT)
(72) Inventor: Bertoli, Emanuele, 25030 Adro (BS) (IT)
(74) Representative: Lecce, Giovanni

(57) **Abstract**

An improved stratified cladding (10) suitable for covering and decorating structures and objects or parts thereof, as well as floors and walls, including outdoors, comprises a first layer or lower support layer (12) in aluminium or its alloys, combined with a layer (14) made of flakes or stands of mother-of-pearl covered on the exposed side by a transparent film which forms a protective layer (18), said layers (12) and (14) being bound together by an adhesive constituting an intermediate layer (16). Said adhesive binding together the layers (12) and (14) consists of double-sided acrylic adhesive or polyurethane glue.

## Description

The present invention relates to an improved stratified cladding for covering and decorating or making structures and objects or parts thereof.

More in particular, the present invention relates to a stratified cladding, as well as to the production method thereof, with which various kinds of objects and possibly parts of structures are covered, including the floors and walls of premises. The stratified cladding of the present invention, which can be advantageously used in outdoor environments also, is especially designed to cover items such as suitcases, bags, cases for scientific and electronic devices, glasses, musical instruments and lighting appliances, consumer goods and equipment, luxury and fashion items, and may also be broadly applied in the automotive, land transport and naval industry, also including the aeronautical and bicycle and motorcycle sectors in general. Said cladding may also constitute a finished product, such as furniture panelling, or be used as the raw material for making objects with a planar or shaped extension by means of moulding, cutting and bending/shaping operations.

In the latter areas, the stratified cladding of the present invention can cover and decorate dashboards and internal parts of vehicles as well as constituent elements of motorcycles such as fuel tanks, mirrors, fenders etc.

Said cladding may also be applied at source to the cited parts of vehicles, or constitute an additional or replacement element of the original claddings.

The solution of a "Sheet having pearl layer for preventing attaching posters and producing method thereof" is for example known from KR 2010 0077684 which provides the teaching for making a sheet having characteristics of non-adhesion, with a pearlised surface appearance and consequent decorative value. However, possible uses of such sheets for a function such as that of stably cladding three-dimensional products in mother of pearl, are not detectable from this prior art document,

JP 2006 088593 refers instead to a "Metallic adhesive sheet for decoration", the purpose of which is to ensure excellent resistance over time and a bright metallic appearance. This characteristic also derives from the presence of an acrylic adhesive incorporating a pearlised pigment.

In this case too, however, possible uses of the sheet as a stable cladding of moulded parts and/or with curved surfaces of heterogeneous products are not obvious.

It is well known that objects and components of various kinds, such as those mentioned above, lend themselves to various customisations, which basically have the purpose of improving the aesthetics depending on the tastes of the final user. In the context of the inserts, which are typically present inside the passenger compartment of the vehicle, the alternatives are limited to metal and wood, materials which sometimes reveal drawbacks of accurate coverage in the presence of non-planar surfaces.

The solution proposed in the Italian patent application n. MI2012A000576 by the same applicant, has contributed to the evolution of this operating field by providing instructions for making a cladding product in which the use of flakes or strands of mother of pearl give the cladding particular aesthetic value and make it possible to create items of considerable esteem, not previously achievable if not with mother of pearl in the form of discs or the like, obtained by cutting and forming non-malleable, semi-finished products.

It has been noted however that this solution may lead to some drawbacks, over time, essentially due to the use of joining adhesives of the constituent layers. In particular, to bind together the support layer formed of a sheet of aluminium and the layer incorporating the mother of pearl flakes or strands, at least one layer of adhesive of the type known by the term "transfer" was used; such component, as has been verified, did not provide adequate structural strength in the long term and gave rise to the formation of micro bubbles under the surface, visible through the transparent protective layer placed over the layer with mother of pearl flakes or strands. In the presence of moisture and/or in conditions of elevated stress micro-ruptures could also occur in correspondence with such bubbles, likely to alter the outward appearance of the cladding.

Even the protective layer itself showed some important drawbacks, such as poor resistance to high temperatures; furthermore, this layer gradually yellowed over time and, in the application phase, required the use of a fixative and a stucco to adhere to the underlying layer of mother of pearl flakes or strands.

The purpose of the present invention is to overcome the drawbacks complained of above.

More particularly, the purpose of the present invention is to provide an improved stratified cladding suitable to ensure adequate structural strength in the long run.

A further purpose of the invention is to provide a cladding as defined above in which the layer of adhesive material which joins the base support to the mother of pearl flakes or strands remains structurally stable, without forming visible micro-bubbles and consequent possible micro-ruptures.

A further purpose of the invention is to provide an improved stratified cladding suitable to withstand temperature excursions of significant magnitude, as well as exposure to damp environments without drawbacks.

Another no less important purpose of the invention is to provide a cladding in which the protective layer also manifests a high resistance to high temperatures, at the same time avoiding the progressive yellowing and the need for fixatives and stucco for its optimal adhesion to the layer of mother of pearl flakes or strands. Another no less important and consequent purpose of the invention is to provide a cladding which is faster to produce, eliminating the phases related to the use of fixatives and stucco.

A further purpose of the invention is to make available to users an improved stratified cladding suitable to ensure a high level of resistance and reliability over time, in addition such as to be easily and economically made.

These and other purposes are achieved by the improved stratified cladding of the present invention according to the main claim.

The construction and functional characteristics of the improved stratified cladding of the present invention will be more clearly comprehensible from the detailed description below in which reference is made to the appended drawings which show a preferred and non-limiting embodiment and wherein:
Figure 1 schematically represents the improved stratified cladding of the present invention;
Figures 2 and 2A schematically represent the same cladding, shaped by way of example with suitable equipment, to show the possibility of obtaining objects with a non-planar or completely planar extension.

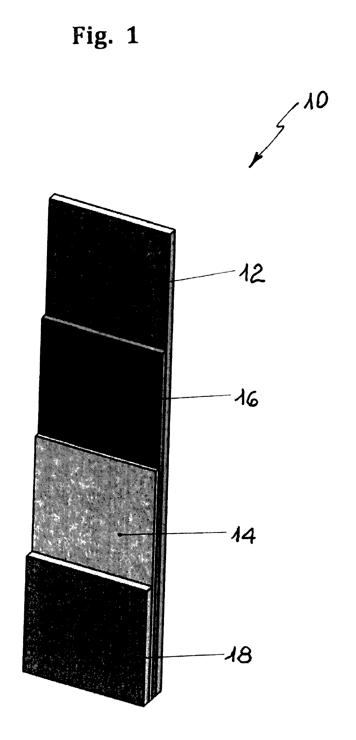

With reference to Figure 1, the improved stratified cladding of the present invention, globally denoted by reference numeral 10 comprises, in the same way as provided for in the above Italian application by the same applicant, a first layer or lower support layer 12 combined with a layer 14 formed of flakes or strands of mother of pearl. The lower support layer 12 is preferably made of a sheet of aluminium or its alloys, or other material having similar mechanical characteristics, the thickness of which is typically between 0.5 and 40 mm; the layer 14 comprises a plurality of flakes or strands of mother of pearl, obtained in the known manner from sea shells and joined by micro-gluing. The thickness of the layer 14 is preferably between 150 and 250 µ. Said layers 12 and 14 are bound together by an adhesive constituting the intermediate layer 16.

According to the invention, the adhesive constituting said layer 16 is made of double-sided adhesive acrylic or polyurethane glue, for example products known on the market under the names of TESA 4965 PV0 made by Tesa SE, GLOMPUR 302 by Unicol Srl or Adler Srl. These adhesive substances are appropriate to the specific use to make the cladding of the present invention in that they withstand t temperatures up to 200°C without cracking, and thermal excursions of considerable amplitude and maintain their adhesive properties intact over time. The bond between said layers 12, 14 through the adhesive constituting the intermediate layer 16 may be achieved through the mechanical action of pressing or a thrust vacuum.

Said layer 14 made of flakes or strands of mother of pearl is covered on the exposed side with a transparent film applied by spraying one or more times, to achieve both a protective layer 18 of the underlying material, and a perfectly smooth and uniform surface. According to a further advantageous feature of the invention, such covering is formed of a transparent coating such as the direct adhesion technical spray known by the name "transparent 2K" made by Motip Dupli Group or by a two-component polyurethane paint for example known on the market by the Legnopur made by Adler. The latter guarantees, according to the manufacturer, resistance to ultraviolet light, thanks to a combination of special UV filters, so that it does not yellow and prevents, or at least significantly slows down, the yellowing process of the layer 14 in mother of pearl. The transparent coating or acrylic paint, in addition, withstands high temperatures and permits possible subsequent operations involving a phase in the furnace. The polyurethane paint mentioned above also has the characteristic of low flammability combined with a support which is hard to burn, consequently optimal for naval application, in addition to being resistant to perspiration and saliva for applications entailing prolonged contact with the human body.

A preferred production method of the improved stratified cladding of the invention provides, in partial agreement with the operating steps described in the previous patent application cited above, for the prior cleaning/brushing of the aluminium support constituting the lower layer 12, on which the adhesive constituting the intermediate layer 16 made of the double-sided acrylic or polyurethane glue is then spread.

At this point, the layer 14 comprising the multiplicity of flakes or strands of mother of pearl is applied to said intermediate layer 16 of adhesive, previously brushed and dusted on both sides. The cleaning/ brushing/dusting of the aforementioned layers 12 and 14 is performed by a system comprising one or more brushes, upper and lower, and the same number of blowing/suction apparatuses for removing dust and dirt.

To obtain the perfect adhesion of the layers 12 and 14 by mean of the intermediate layer 16 of adhesive, the sandwich thus obtained is subjected to controlled mechanical pressure, with known means, over the entire surface. Alternatively - and innovatively - such adhesion may be achieved by a thrust-vacuum operation; in this case, the extraction of air and the relative pressure maximise the effect and the uniform distribution of the adhesive forming the intermediate layer 16.

Once the layers 12 and 14 have been joined, the latter is subjected to the application of the protective layer of direct adhesion transparent coating or of the two-component polyurethane protective transparent coating as indicated above. This protective layer is applied by spraying in a special booth, possibly pressurised; the coating layer 14 in mother of pearl may require two or more spray procedures for a smooth and uniform surface. One or more of these steps may provide for use of coloured paint. Subsequently, the coating thus obtained is inserted in a furnace for a time indicatively between 5 and 30 minutes at a temperature preferably between 40°C and 90°C and then sent for cutting to size, for example laser cutting, while any shaping is done before inserting in the furnace and before the application of the direct adhesion transparent coating or protective transparent coating constituting the layer 18.

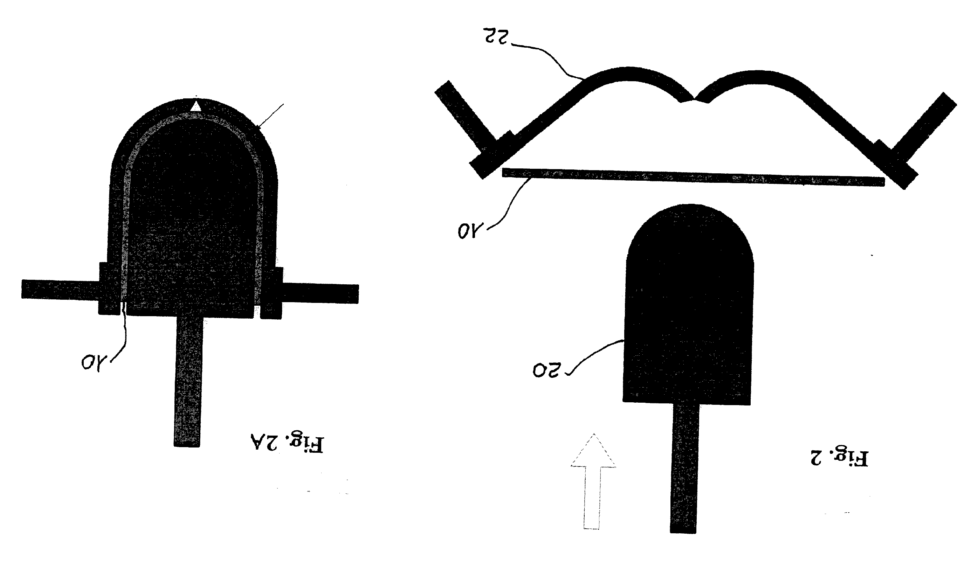

As shown schematically in Figures 2 and 2A, the cladding of the present invention can also be subjected to shaping operations, before the application of direct adhesion transparent coating or of the protective transparent coating constituting the layer 18 for making objects of various kinds which require operations such as bending, shaping, drilling etc....

In particular, Figure 2 schematically illustrates a part of the cladding 10 in planar extension positioned in correspondence with the shaping equipment 22 and subjected to the action of a punch 20 mechanically activated in the known manner to descend on said part of the cladding 10 and shape it according to the shape of the equipment 22, by way of example.

Figure 2A shows the punch which has shaped the part of cladding 10, with the equipment 22 which, formed for example of a pair of semi-shells hinged to each other, is closed back onto itself to shape and make said part of the cladding 10 adhere to the shape of the punch 20.

As may be seen from the above, the advantages which the invention achieves are evident.

The use of double sided acrylic or polyurethane glue to bind together the support layer 12 and the layer 14 formed of mother of pearl flakes or strands ensures optimum structural strength even in the long term of the sandwich thus obtained and avoids the possible formation of micro bubbles.

The polyurethane glue in particular makes it possible to easily perform the bending/shaping operations of sheet-like parts made from the sandwich in that the catalysis of this adhesive substance is not immediate; thus making it possible to achieve such bending/ shaping without causing breakage.

Additionally, use for forming the transparent protective film covering the exposed side of the layer 14 comprising the mother of pearl flakes or strands of a direct adhesion technical spray or a two-component polyurethane paint of the type previously indicated ensures protection from ultraviolet rays and prevents or at least appreciably slows down the yellowing process of said layer 14.

The acrylic paint, moreover, is able to withstand high temperatures and does not create problems in the phase/ passage in the furnace of the sandwich once obtained; this paint, in fact, makes it possible to perform subsequent innovative treatments, at high temperatures, such as sublimation and 3D sublimation.

Despite the invention having been described above with particular reference to one of its embodiments, given solely by way of a non-limiting example, numerous modifications and variants will appear evident to a person skilled in the art in the light of the above description. The present invention therefore sets out to embrace all the modifications and variants which fall within the sphere and scope of the following claims.

## Claims

1. An improved stratified cladding (10) suitable for covering and decorating or making structures and objects or parts thereof, as well as floors and walls, including outdoors, comprising a first layer or lower support layer (12), combined with a layer (14) made of mother-of-pearl flakes or strands covered on the exposed side by a transparent film which forms a protective layer (18), said layers (12) and (14) being bound together by an adhesive constituting an intermediate layer (16), **characterised in that** said adhesive consists of double-sided adhesive acrylic or polyurethane glue.

2. The cladding according to claim 1, **characterised in that** said lower support layer (12) is made of aluminium or its alloys or of another material having the same mechanical characteristics.

3. The cladding according to claim 1, **characterised in that** the protective film constituting the layer (18) covering the exposed side of the layer (14) formed of flakes or strands of mother of pearl consists of a direct adhesion technical spray or of a two-component polyurethane paint for example of the type of TESA® 4965 PV0 made by Tesa SE, GLOMPUR 302 made by Unicol or Adler Srl Srl.

4. The cladding according to claim 1, **characterised in that** the thickness of the lower support layer is between 0.5 and 40 mm.

5. The cladding according to claim 3, **characterised in that** the protective film forming the layer (18) covering the exposed side of the layer (14) formed of flakes or strands of mother of pearl is applied one or more times to the same layer (14).

6. The cladding according to claim 1, **characterised in that** the layer (14) made of flakes or strands of mother of pearl has a thickness comprised between 150 and at least 250 µ.

7. The cladding according to claim 1, **characterised in that** the layer (16) of adhesive or polyurethane adhesive has a thickness comprised between 50 and 200 µ.

8. A method for making the improved stratified cladding according to the previous claims, **characterised in that** it comprises the steps of:
- preparing a support layer (12) in aluminium or its alloys and a layer (14) comprising flakes or strands of mother of pearl made from shells, assembled by micro gluing;
- cleaning/ brushing the support (12) in aluminium and the layer (14) comprising the flakes or strands of mother of pearl;
- binding said layers (12) and (14) to each other with the interposition of double sided acrylic or polyurethane glue;
- controlled mechanical pressing of the sandwich formed by said layers (12) and (14) between which the double sided acrylic or polyurethane glue is interposed or thrust vacuum intervention on said sandwich;
- spray application in one or more steps, on the layer (14) comprising the flakes or strands of mother of pearl, of a film consisting of a protective transparent coating such as direct adhesion technical spray known as 'Transparent 2K" or of a two-component polyurethane paint;
- insertion in a furnace for a time indicatively between 5 and 30 minutes at a temperature between 40°C and 90°C of the sandwich thus obtained and subsequent cutting to size of the same.

9. The method according to claim 8, **characterised in that** the cladding composed of the sandwich obtained is shaped and cut to size before painting and the subsequent step in the furnace.

10. The method according to claim 8, **characterised in that** at least one passage of spray application onto the layer (14) comprising the flakes or strands of mother of pearl includes a colour component combined with the transparent film, or a subsequent painting treatment such as sublimation or 3D sublimation.
